# EUROPÄISCHE PATENTSCHRIFT

(11) **EP 3 697 653 B1**
(45) Veröffentlichungstag und Bekanntmachung des Hinweises auf die Patenterteilung: **10.08.2022**
(21) Anmeldenummer: 18737816.1
(22) Anmeldetag: 21.06.2018
(51) Int. Cl.: B60T 11/16, B60T 13/12

(54) **BREMSGERÄT FÜR EINE HYDRAULISCHE KRAFTFAHRZEUGBREMSANLAGE MIT EINER ANSCHLAGSCHEIBE**
BRAKING DEVICE FOR A HYDRAULIC MOTOR VEHICLE BRAKING SYSTEM COMPRISING A STOP DISC
APPAREIL DE FREINAGE POUR UN SYSTÈME DE FREINAGE HYDRAULIQUE DE VÉHICULE À MOTEUR COMPRENANT UN DISQUE DE BUTÉE

(30) Priorität: 20.10.2017 DE 102017218768
(43) Veröffentlichungstag der Anmeldung: 26.08.2020
(73) Patentinhaber: Continental Automotive Technologies GmbH, 30165 Hannover (DE)
(72) Erfinder: SELLINGER, Thomas, 63303 Dreieich (DE); KOCH, Christian Rene, 60431 Frankfurt am Main (DE); COLASANTA, Jefferson, 65719 Hofheim am Taunus (DE); DROTT, Peter, 65936 Frankfurt/Main (DE)
(74) Vertreter: Continental Corporation
(86) Internationale Anmeldenummer: PCT/EP2018/066530
(87) Internationale Veröffentlichungsnummer: WO 2019/076491

(56) Entgegenhaltungen:
- WO-A2-2011/012431
- DE-A1-102010 022 106
- DE-A1-102015 201 311
- KR-A- 20140 059 666

## Beschreibung

Die Erfindung betrifft ein Bremsgerät für eine hydraulische Kraftfahrzeugbremsanlage nach dem Oberbegriff des Anspruchs 1.

Bedingt durch zunehmende Automatisierung der Fahrzeugsteuerung, darunter auch der Bremsensteuerung, aber auch den Wunsch nach Bauraumeinsparung, gewinnen fremdansteuerbare Bremsgeräte mit deutlich kleiner bauenden elektrohydraulischen, elektromechanischen und dergleichen Verstärkerstufen eine zunehmende Verbreitung.

Fremdansteuerbare Bremsgeräte benötigen für die zuverlässige Ansteuerung, Kalibrierung und Wegerfassung des Fahrerwunsches die Kenntnis über die exakte relative Position eines den Bremsdruck aufbauenden Zylinderkolbens in seiner unbetätigten Ausgangslage - den Null- oder Referenzpunkt. Um den Aufwand für eine komplexe Sensierung und räumliche Kalibrierung zu vermeiden, ist es bekannt, einen ortsfesten mechanischen Anschlag für den Zylinderkolben vorzusehen, welcher den vorgenannten Nullpunkt definiert und als Messursprung für die elektronischen Steuerungssysteme dient.

Die unterdruckverstärkerlosen Aggregate weisen jedoch im Unterschied zu einem konventionellen Bremsgerät konzeptbeding eine eher geringe Eigendämpfung. Dies führt dazu, dass es beispielsweise bei schnellem Losen des Bremspedals nach einer Bremsung zu einer hohen Rücklaufgeschwindigkeit des Zylinderkolbens mit den daran gekoppelten massiven mechanischen Betätigungskomponenten wie beispielsweise Betätigungsstange und Bremspedal kommt, wodurch beim Auftreffen auf den mechanischen Anschlag ein Anschlaggeräusch entsteht, welches als störend empfunden werden kann.

Eine allgemein bekannte, grundsätzliche Methode, eine Gummischeibe zur Anschlagsdämpfung zu verwenden ist im vorliegenden Fall ungeeignet, weil aufgrund der hohen Elastizität der Nullpunkt nicht innerhalb der erforderlichen engen Toleranz eingehalten werden kann.

Aus der Praxis ist es daher bekannt, eine Anschlagscheibe aus einem thermoplastischen Kunststoff, insbesondere Polyetheretherketon (PEEK) als unmittelbarer Anschlag für den Zylinderkolben einzusetzen. Die Dämpfungswirkung einer derartigen Scheibe wird jedoch oft als zu gering und verbesserungswürdig angesehen. Zudem neiden sich derartige Scheibe über die Dauer zu verformen, so dass sich der Nullpunkt mit der Zeit verschiebt und aufwendige Kalibrierungsmaßnahmen verursacht.

Aus DE 10 2010 022106 A1 ist ein hydraulischer Geberzylinder bekannt, bei welchem zur Anschlagdämpfung eine Wellfederscheibe vorgeschlagen wird. Neben einer verhältnismäßig geringen Dämpfung weist eine derartige Lösung weitere Nachteile auf, denn ein definierter reproduzierbarer Nullpunkt wäre nur bei einer vollständig komprimierten Wellfeder erreichbar. Angesichts einer sehr geringen Eigendämpfung würden bereits geringe Abweichungen der Anschlagkraft entweder einen harten Anschlag oder einen wandernden Nullpunkt zur Folge haben.

Es stellt sich somit eine Aufgabe, ein verbessertes unterdruckverstärkerloses Bremsgerät anzubieten, bei dem der Nullpunkt des Zylinderkolbens möglichst dauerhaft innerhalb definierter Toleranzen verbleibt, ermöglicht und gleichzeitig der Anschlaggeräusch zuverlässig reduziert wird.

Die Aufgabe wird erfindungsgemäß durch ein Bremsgerät mit Merkmalskombination nach Anspruch 1 gelöst. Unteransprüche geben weitere vorteilhafte Ausführungen und Weiterbildungen der Erfindung an.

Die Erfindung sieht vor, dass die Anschlagscheibe in Axialrichtung über einen definierten Komprimierungsweg elastisch reversibel komprimierbar ist und Mittel zur einer weggesteuert definierten Begrenzung des Komprimierungswegs aufweist.

Dadurch wird die nötige Dämpfung des Geräusches erzielt und gleichzeitig einen dauerhaft innerhalb enger Toleranzen verbleibender Nullpunkt des Zylinderkolbens sichergestellt.

Die Anschlagscheibe weist eine elastomere Ummantelung und einen von der Ummantelung zumindest teilweise ummantelten Kern auf. Vorzugsweise kann die Ummantelung aus einem günstigen, bremsflüssigkeitsbeständigen EPDM Polymer durch Umspritzen des Kerns erzeugt werden und der Kern aus einem wesentlich steiferen Werkstoff wie Metall oder Faserverstärkter Kunststoff sein. Durch diese Kombination kann die vorteilhafte Kombination zwischen dauerhaft verfügbaren Anschlagdämpfung bei gleichbleibenden Nullpunkt besonders kostengünstig und leicht adaptierbar realisiert werden. Der Werkstoff für die Ummantelung ist dabei so ausgelegt, dass zugleich eine ausreichende Dämpfung erzielt wird und gleichzeitig die vorhandene Rückstellkraft ausreicht, um den Kontakt zwischen dem Zylinderkolben und dem Kern der Anschlagscheibe herzustellen.

Ferner weist die erfindungsgemäße Anschlagscheibe eine zu der Mittelachse orthogonale Anschlagebene auf, an welcher der Zylinderkolben in seiner unbetätigten Ausgangslage anliegt, wobei der Kern über mehrere axial in bis zu der Anschlagebene A vorgestreckte Anhebungen aufweist, die in Umfangsrichtung zueinander beabstandet angeordnet sind. Vorzugsweise bilden die Anhebungen dabei Plateaus aus, deren axiale Endflächen in der Anschlagebene angeordnet und nicht vom Werkstoff der Ummantelung bedeckt sind.

Auf den dadurch definierten Kontaktflächen Punkten schlägt der Zylinderkolben nach Komprimierung der Ummantelung auf und kommt so in eine definierte Endposition.

Damit wird eine zuverlässige verschleiß- und verformungsfreie Anschlagmöglichkeit für den Zylinderkolben realisiert und die erfindungsgemäß gestaltete Anschlagscheibe kann einfach im Austausch für die bekannten Serienanschlagscheiben eingesetzt werden.

Gemäß der weiteren bevorzugten Weiterbildung weist die Ummantelung in Umfangsrichtung in einem Bereich zwischen zwei benachbarten Anhebungen in sich abwechselnder Manier nebeneinander angeordnete Erhöhungen und Vertiefungen auf, die Erhöhungen liegen axial in Bezug auf die Anschlagebene höher und Vertiefungen sinngemäß - tiefer. Dadurch wird der Werkstoff in den Erhöhungen bei deren Komprimierung effektiv in die Vertiefungen verdrängt und eine zuverlässige Auflage des Zylinderkolbens am Kern der Anschlagscheibe sichergestellt.

Vorzugsweise sind die Erhöhungen dabei rippenförmig in radiale Richtung über die Stirnseite der Anschlagscheibe gezogen ausgebildet. Dadurch kann der Zylinderkolben gewicht- und werkstoffsparend besonders dünnwandig gestaltet und seine axialen Positionierungstoleranten in der Zylinderbohrung zuverlässig ausgeglichen werden

Gemäß einer weiteren vorteilhaften Ausführungsform sind an der Ummantelung mehrere, in radiale Richtung vorgestreckte Radialvorsprünge vorgesehen, mit denen ein sicherer Sitz in der Zylinderbohrung durch leichtes Übermaß und eine leichte Montage der Anschlagscheibe im Gehäuse sichergestellt ist.

Gemäß einer besonders bevorzugten Ausführungsform der Erfindung ist die Anschlagscheibe ebenensymmetrisch in Bezug auf eine Zentralebene aufgebaut, wodurch sie beidseitig gleich wirkt und keine Seitenunterscheidung bei der Montage beachtet werden muss.

Des Weiteren sieht die Erfindung einen vom Gehäuse radial die Zylinderbohrung ragenden Stützvorsprung, insbesondere einen umlaufenden Kragen, vor, welcher eine zuverlässig Krafteinleitung aus dem Zylinderkolben in das Gehäuse und einen stabile Nullpunkt garantiert.

Weitere Merkmale und Vorteile der Erfindung ergeben sich aus der nachfolgenden Beschreibung eines erfindungsgemäßen Ausführungsbeispiels. Nachstehend zeigten:
Fig.1 eine vereinfachte Teilansicht eines erfindungsgemäßen Bremsgeräts in Längsschnitt.
Fig.2 eine vergrößerte Ansicht eines Bereiches der Ausführungsform nach Fig.1 mit der Anschlagscheibe.
Fig.3 eine räumliche Anschlicht einer erfindungsgemäßen Ausführungsform der Anschlagscheibe ganz a sowie entlang der Mittelachse geschnitten b.
Fig.4 Ausschnitt einer vereinfachte Seitenansicht der Anschlagscheibe nach Fig.3 in Schnittdarstellung, im unbelasteten Zustand.
Fig.5 Ansicht nach Fig.4, jedoch im Zusammenbau, in der unbetätigten Ausgangslage mit dem angeschlagenen Zylinderkolben.

### Fig.1

Das erfindungsgemäße Bremsgerät 1 weist ein mehrteiliges Gehäuse 2 auf, in dem eine Zylinderbohrung 3 mit einer Mittelachse M, zur Aufnahme eines Zylinderkolbens 4 angeordnet ist. Der Zylinderkolben 4 ist in der Zylinderbohrung 3 entlang der Mittelachse M bei einer Bremsung durch ein Betätigungselement 17 in eine Betätigungsrichtung B und nach der Bremsung durch Federkraft entgegengesetzt in eine Löserichtung L linear versetzbar angeordnet. Das Betätigungselement 17 ist von außen durch einen axialen Durchbruch 20 in das Gehäuse 2 und darin in den Zylinderkolben 4 hineingeführt. Radial nach innen in die Zylinderbohrung 3 hinein ragt ein am Gehäuse 2 ausgebildeter Stützvorsprung 19. Zwischen dem Stützvorsprung 19 und dem Zylinderkolben 4 ist eine Anschlagscheibe 5 eingeklemmt. In der dargestellten Ausführungsform ist der Stützvorsprung 19 als ein an einem Gehäusedeckel 16 des mehrteiligen Gehäuses 2 ausgebildeter umlaufender Kragen ausgeführt. Andere funktionsäquivalente Ausbildungen des Stützvorsprungs sind innerhalb der Erfindung selbstverständlich zulässig.

In der dargestellten, unbetätigten Ausgangsstellung liegt der Zylinderkolben 4 mit seiner rückwärtigen Anschlagfläche 18 in einer Anschlagebene A an der Anschlagscheibe 5 angeschlagen, welche hierbei seine weitere Bewegung in Löserichtung L begrenzt. Die Anschlagebene A referenziert den Nullpunkt des Zylinderkolbens 4 in seiner unbetätigten Ausgangsstellung.

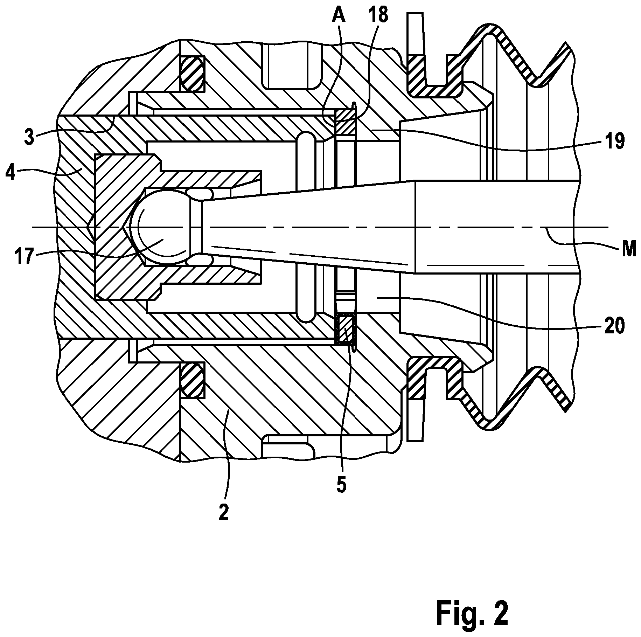

Eine vergrößerte Darstellung zur Verdeutlichung der vorstehend beschriebenen Positionierung des Zylinderkolbens 4 im Nullpunkt und der relevanten Komponenten sind der Fig.2 entnehmbar.

### Fig.3

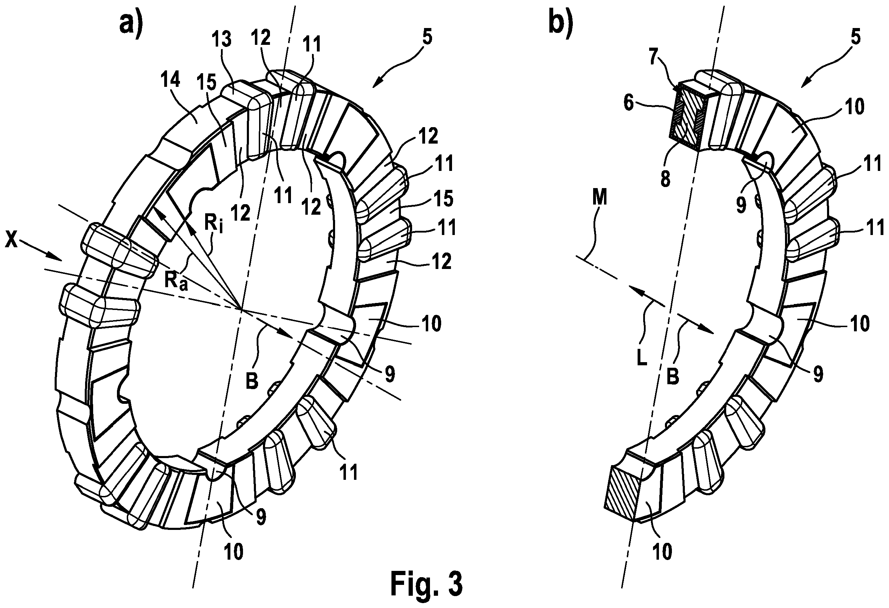

In der Fig.3 ist eine bevorzugte erfindungsgemäße Ausführungsform der Anschlagscheibe 5 räumlich dargestellt.

Erreichen der Nullposition des Kolbens sichergestellt ist.

Die dargestellte Anschlagscheibe 5 besteht in einer Werkstoffkombination aus zwei verschiedenen Werkstoffen. Sie umfasst einen harten, vergleichsweise verschleißfesten Kern 7 und eine weiche, elastische und dämpfende Ummantelung 6, welche den Kern 7 nahezu vollständig ummantelt.

Bevorzugt ist der Kern 7 aus einem Metall, insbesondere einer Aluminiumlegierung, und die Ummantelung aus einem Elastomer, insbesondere einem Terpolymer wie EPDM-Polymer, erzeugt. Die Shorehärte des Elastomers wird dabei in Abhängigkeit von Betriebsfaktoren so gewählt, dass den konkreten Anwendungsfall eine möglichst optimale Balance zwischen Dämpfung und Elastizität realisiert ist.

Innerhalb der Erfindung kann der Kern jedoch auch anderen vergleichsweise steifen und verschleißfesten Werkstoffen ausgebildet sein, beispielsweise faserverstärkten Thermo- oder Duroplasten.

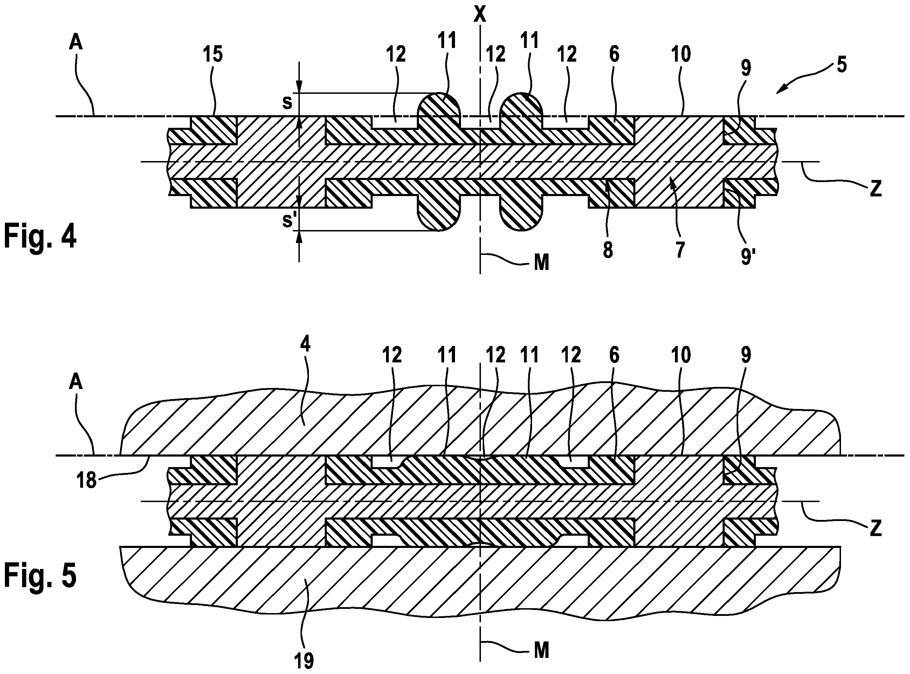

In der dargestellten, bevorzugten Ausführung ist die Anschlagscheibe 5 ebenensymmetrisch in Bezug auf eine orthogonale Zentralebene Z ausgebildet. Daher verstehen sich die nachfolgenden Ausführungen als gleich geltend für beide axialen Richtungen, von der Zentralebene Z ausgehend und zu dieser orthogonal, wie insbesondere aus den Fig.4 und 5 deutlich wird.

Der Kern 7 in der dargestellten bevorzugten Ausführung weist einen vergleichsweise schmalen ringförmigen Grundkörper 8 und mehrere, axial bis zu der Anschlagebene A vorgestreckte Anhebungen 9 auf, welche letztlich als ein relativ unkomprimierbares Anschlagelement für den Zylinderkolben 4 und den Stützvorsprung 19 fungieren und im Wesentlichen den Kraftfluß zwischen dem Zylinderkolben 4 und dem Gehäuse 2 schließen. Die Anzahl der Anhebungen kann innerhalb der Erfindung bedarfsgemäß je nach Belastung und Umfangslänge variieren. Bevorzugt sollten jedoch für eine räumlich stabile Auflage die Anhebungen 9 regelmäßig über den Umfang verteilt angeordnet und mindestens drei Anhebungen 9 vorgesehen sein. In der dargestellten Ausführung sind es fünf in Umfangsrichtung gleichmäßig zueinander beabstandet angeordnete Anhebungen 9.

Die Anhebungen 9 bilden flache Plateaus 10 aus, welche nicht von der Ummantelung 6 bedeckt sind und deren axiale Endflächen in der Anschlagebene A angeordnet sind. Weitere, beispielsweise kuppel-, konus-, pyramidenförmige und vergleichbare Gestaltungen der Anhebungen 9 mit Endpunkten statt Endflächen in der Anschlagebene A sind innerhalb der Erfindung jedoch weiterhin zulässig.

Die elastische Ummantelung 6 bildet in Umfangsrichtung in einem Bereich zwischen zwei Anhebungen 9 abwechselnd Vertiefungen 12 und Erhöhungen 11 auf. Es versteht sich, dass die Erhöhungen 9 jeweils oberhalb der Anschlagebene A vorgestreckt und die Vertiefungen 12 unterhalb der Anschlagebene A vertieft sind. Jede Erhöhung 11 ist vorzugsweise in Umfangsrichtung beidseitig unmittelbar von je einer Vertiefung 12 flankiert.

Eine Erhöhung 11 ist als eine Art Rippe und die Vertiefung als eine Art Nut an der Stirnseite 15 der Anschlagscheibe 5 ausgebildet, die in radiale Richtung zwischen einem radialen Innenmaß Ri und einem radialen Außenmaß Ra gezogen ist. Im gezeigten Beispiel verlaufen sie strahlenförmig quer über die gesamte Stirnseite 15. Es ist innerhalb der Erfindung auch denkbar, dass das Innenmaß Ri nicht dem Innenradius der Anschlagscheibe 5 gleicht, sondern größer ist und/oder das Außenmaß Ra kleiner als der Außenradius der Anschlagscheibe 5 ist oder die Erhöhungen nicht gerade strahlenförmig, sondern in Umfangsrichtung geneigt oder andersartig gekrümmt oder geschlängelt ausgebildet sind.

Die Ummantelung 6 weist ferner mehrere Radialvorsprünge 13 auf, die in der gezeigten Ausführungsform als axiale Fortsetzungen der rippenförmigen Erhöhungen 11, und grundsätzlich in Umfangsrichtung regelmäßig in radiale Richtung über die radiale Außenseite 14 der Anschlagscheibe 5 hinaus vorgestreckt angeordnet. Der Durchmesser der radialen Außenseite 14 ist dabei gleich oder geringfügig geringer gewählt, als der Durchmesser der Zylinderbohrung 3 und die maximale radiale Streckung der Radialvorsprünge 13 geringfügig größer.

Die Anzahl der Erhöhungen 11, Vertiefungen 12 und Radialvorsprünge 13 kann sich innerhalb der Erfindung variieren und richtet sich in jeder konkreten Ausführung nach vorliegenden Betriebsanforderungen wie beispielsweise Durchmesser der Zylinderbohrung 3, Betriebslasten, verwendeten Werkstoffen, Gestaltung der Anschlagfläche 18, erforderlichen Dämpfungsmaß und vergleichbaren Faktoren. In der dargestellten Ausführungsform befinden sich zwischen zwei Anhebungen 9 beispielhaft je zwei Erhöhungen 11 und je drei Vertiefungen 12.

### Fig.4

Die Fig.4 zeigt vereinfacht ein Ausschnitt der Anschlagscheibe in der Sicht "X" nach Fig.3, als Schnittdarstellung, im unbelasteten Zustand.

Zusätzlich zu der vorstehend beschriebenen Details, wird ersichtlich, dass die Erhöhungen 11 oberhalb der Anschlagebene A beziehungsweise des Plateaus 10 zylinderkolbenseitig eine erste Überhöhung s und stützvorsprungseitig eine zweite Überhöhung s' aufweisen, die bei der gezeigten, ebenensymmetrischen Ausführung gleich sind.

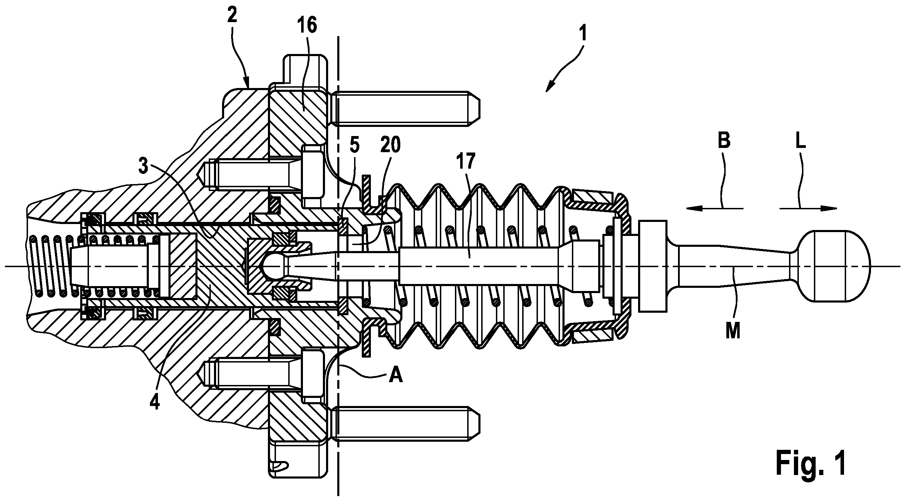

In einem gemäß der unbetätigten Ausgangslage nach Fig.1 belasteten Zustand wird die Ummantelung 6 axial exakt um die Summe der beiden Überhöhungen s und s' komprimiert. Somit bildet die Summe der beiden Überhöhungen s und s' den Komprimierungsweg S der Anschlagscheibe 5.

### Fig.5

Dieser Belastungszustand ist in der Fig.5 dargestellt. Beim Zurückfahren in Löserichtung L trifft der Zylinderkolben 4 mit seiner rückwärtigen Anschlagfläche 18 zunächst auf die Erhöhungen 11 auf und schiebt die Anschlagscheibe 5 gleichzeitig in Richtung Stützvorsprung 19. Die Erhöhungen 11 verformen sich unter Bildung einer Gegenkraft und nehmen dabei ein Teil der kinetischen Energie des Zylinderkolbens 4 auf. Der Zylinderkolben 4 wird dadurch über den gesamten Komprimierungsweg S abgebremst. Am Ende des Komprimierungswegs S schlägt der abgebremste Zylinderkolben 4 und der Stützvorsprung 19 gedämpft an den steifen Anhebungen 9 des Kerns 7 an, womit der Komprimierungsweg S konstruktiv definiert weggesteuert begrenzt ist. In der resultierenden unbetätigten Ausgangslage ist die Anschlagscheibe 5 zwischen dem Zylinderkolben 4 und dem Stützvorsprung 19 eingeklemmt und der Kraftfluss zwischen dem Zylinderkolben 4 und dem Gehäuse 2 verläuft unmittelbar direkt durch den harten nicht komprimierbaren Kern 7 der Anschlagscheibe 5.

Das Werkstoff in den Erhöhungen 11 wird beim Komprimieren in die benachbarten Vertiefungen verdrängt, wodurch sichergestellt wird, dass die elastische Ummantelung 6 in der unbetätigten Ausgangslage sich axial vollständig zwischen den durch die Erhöhungen 9 begrenzten Ebenen und der Kern 7 sich in einem simultanen Kontakt zu dem Zylinderkolben 4 und dem Gehäuse 2 befinden.

Bei einer Verschiebung des Zylinderkolbens 4 in die Betätigungsrichtung B kehrt die Anschlagscheibe 5 in ihren unbelasteten Zustand gemäß Fig.4 zurück.

### Bezugszeichen:

- 1: Bremsgerät
- 2: Gehäuse
- 3: Zylinderbohrung
- 4: Zylinderkolben
- 5: Anschlagscheibe
- 6: Ummantelung
- 7: Kern
- 8: Grundkörper
- 9: Anhebung
- 10: Plateau
- 11: Erhöhung
- 12: Vertiefungen
- 13: Radialvorsprünge
- 14: Außenseite
- 15: Stirnseite
- 16: Gehäusedeckel
- 17: Betätigungselement
- 18: Anschlagfläche
- 19: Stützvorsprung
- 20: Durchbruch
- A: Anschlagebene
- B: Betätigungsrichtung
- L: Löserichtung
- M: Mittelachse
- S: Komprimierungsweg
- Z: Zentralebene
- Ri: radiales Innenmaß
- Ra: radiales Außenmaß

## Patentansprüche

1. Bremsgerät (1) für eine unterdruckverstärkerlose hydraulische Kraftfahrzeugbremsanlage, umfassend ein Gehäuse (2) mit wenigstens einer Zylinderbohrung (3), in der ein Zylinderkolben (4) entlang einer Mittelachse (M) in eine Betätigungsrichtung (B) sowie in eine der Betätigungsrichtung (B) entgegen gerichtete Löserichtung (L) linear versetzbar geführt ist, mit einer Anschlagscheibe (5), welche die Bewegung des Zylinderkolbens (4) in Löserichtung (L) begrenzt und dadurch seine unbetätigte Ausgangslage definiert **dadurch gekennzeichnet, dass** die Anschlagscheibe (5) eine elastomere Ummantelung (6) und einen von der Ummantelung zumindest teilweise ummantelten Kern (7) aufweist, wobei der Kern (7) aus einem im Vergleich zur Ummantelung (6) wesentlich steiferen Werkstoff aufgebaut ist, wodurch die Anschlagscheibe (5) in Axialrichtung über einen weggesteuert begrenzt definierten Komprimierungsweg (S) elastisch reversibel komprimierbar ist.

2. Bremsgerät (1) nach Anspruch 1 **dadurch gekennzeichnet, dass** die Anschlagscheibe (5) eine zu der Mittelachse (M) orthogonale Anschlagebene (A) aufweist, an der der Zylinderkolben (4) in seiner unbetätigten Ausgangslage anliegt, wobei der Kern (7) mehrere axial in Betätigungsrichtung (B) bis zu der Anschlagebene (A) vorgestreckte Anhebungen (9) aufweist, die in Umfangsrichtung zueinander beabstandet angeordnet sind.

3. Bremsgerät (1) nach Anspruch 2**dadurch gekennzeichnet, dass** die Anhebungen (9) flache Plateaus (10) ausbilden, deren axiale Endflächen in der Anschlagebene (A) angeordnet sind

4. Bremsgerät (1) nach Anspruch 2 oder 3 **dadurch gekennzeichnet, dass** die Ummantelung (6) in Umfangsrichtung zwischen zwei benachbarten Anhebungen (9) wenigstens eine Erhöhung (11) aufweist, die in Umfangsrichtung zwischen zwei Anhebungen (9) angeordnet ist und in Betätigungsrichtung (B) oberhalb der Anschlagebene (A) vorgestreckt ist.

5. Bremsgerät (1) nach Anspruch 4 **dadurch gekennzeichnet, dass** die Ummantelung (6) wenigstens eine Vertiefungen (12) aufweist, die in Betätigungsrichtung (B) unterhalb der Anschlagebene (A) ausgebildet und wenigstens einer Erhöhung (11) unmittelbar benachbart angeordnet ist.

6. Bremsgerät (1) nach Anspruch 4 oder 5 **dadurch gekennzeichnet, dass** die Erhöhung (11) als eine Rippe gestaltet ist, die sich in einer Stirnseite (15) der Anschlagscheibe (5) zwischen einem radialen Innenmaß (Ri) und einem radialen Außenmaß (Ra) gezogen ausgebildet ist.

7. Bremsgerät (1) nach wenigstens einem der vorstehenden Ansprüche **dadurch gekennzeichnet, dass** die die Ummantelung (6) mehrere Radialvorsprünge (13) aufweist, die in Umfangsrichtung regelmäßig verteilt und in radiale Richtung über eine radiale Außenseite (14) der Anschlagscheibe (5) hinaus sowie größer als ein Durchmesser der Zylinderbohrung (3) vorgestreckt sind.

8. Bremsgerät (1) nach wenigstens einem der vorstehenden Ansprüche **dadurch gekennzeichnet, dass** die Anschlagscheibe (5) im Wesentlich ebenensymmetrisch in Bezug auf eine zu der Mittelachse (M) orthogonale Zentralebene (Z) aufgebaut ist.

9. Bremsgerät (1) nach wenigstens einem der vorstehenden Ansprüche **dadurch gekennzeichnet, dass** das Gehäuse (2) zumindest einen radial nach innen in die Zylinderbohrung (3) ragenden Stützvorsprung (19) aufweist, an dem sich die Anschlagscheibe (5) in Löserichtung (L) abstützt.

## Claims

1. Brake device (1) for a hydraulic motor vehicle brake system without a vacuum booster, comprising a housing (2) with at least one cylinder bore (3), in which a cylinder piston (4) is guided so as to be linearly displaceable along a centre axis (M) in an actuating direction (B) and in a release direction (L) which is directed counter to the actuating direction (B), with a stop ring (5) which limits the movement of the cylinder piston (4) in the release direction (L) and defines its non-actuated starting position as a result, **characterized in that** the stop ring (5) has an elastomeric covering (6) and a core (7) which is covered at least partially by the covering, the core (7) being constructed from a substantially more rigid material in comparison with the covering (6), as a result of which the stop ring (5) can be compressed in an elastically reversible manner in the axial direction over a compression travel (S) which is defined so as to be limited in a displacement-controlled manner.

2. Brake device (1) according to Claim 1, **characterized in that** the stop ring (5) has a stop plane (A) which is orthogonal with respect to the centre axis (M) and against which the cylinder piston (4) bears in its non-actuated starting position, the core (7) having a plurality of elevated portions (9) which are thrust out axially in the actuating direction (B) as far as the stop plane (A) and are arranged spaced apart from one another in the circumferential direction.

3. Brake unit (1) according to Claim 2, **characterized in that** the elevated portions (9) configure flat plateaus (10), the axial end faces of which are arranged in the stop plane (A).

4. Brake device (1) according to Claim 2 or 3, **characterized in that** the covering (6) has at least one raised portion (11) in the circumferential direction between two adjacent elevated portions (9), which raised portion (11) is arranged between two elevated portions (9) in the circumferential direction and is thrust out in the actuating direction (B) above the stop plane (A).

5. Brake device (1) according to Claim 4, **characterized in that** the covering (6) has at least one depression (12) which is configured below the stop plane (A) in the actuating direction (B) and is arranged directly adjacent to at least one raised portion (11).

6. Brake device (1) according to Claim 4 or 5, **characterized in that** the raised portion (11) is designed as a rib which is of drawn configuration in an end side (15) of the stop ring (5) between a radial internal dimension (Ri) and a radial external dimension (Ra).

7. Brake device (1) according to at least one of the preceding claims, **characterized in that** the covering (6) has a plurality of radial projections (13) which are distributed regularly in the circumferential direction and are thrust out in the radial direction beyond the radial outer side (14) of the stop ring (5) and to a greater extent than a diameter of the cylinder bore (3).

8. Brake device (1) according to at least one of the preceding claims, **characterized in that** the stop ring (5) is of substantially planar-symmetrical configuration in relation to a central plane (Z) which is orthogonal with respect to the centre axis (M).

9. Brake device (1) according to at least one of the preceding claims, **characterized in that** the housing (2) has at least one supporting projection (19) which protrudes radially inwards into the cylinder bore (3) and on which the stop ring (5) is supported in the release direction (L).

## Revendications

1. Appareil de freinage (1) pour un système de freinage hydraulique de véhicule automobile sans amplificateur de dépression, comprenant un carter (2) avec au moins un alésage cylindrique (3), dans lequel un piston cylindrique (4) est guidé de manière à pouvoir être déplacé linéairement le long d'un axe médian (M) dans une direction d'actionnement (B) ainsi que dans une direction de dégagement (L) dirigée à l'encontre de la direction d'actionnement (B), avec un disque de butée (5) qui limite le mouvement du piston cylindrique (4) dans la direction de dégagement (L) et définit ainsi sa position initiale non actionnée, **caractérisé en ce que** le disque de butée (5) présente une enveloppe élastomère (6) et un noyau (7) au moins partiellement enveloppé par l'enveloppe, le noyau (7) étant construit en un matériau essentiellement plus rigide que l'enveloppe (6), le disque de butée (5) pouvant ainsi être comprimé élastiquement de manière réversible dans la direction axiale sur une course de compression (S) définie de manière limitée commandée par la course.

2. Appareil de freinage (1) selon la revendication 1, **caractérisé en ce que** le disque de butée (5) présente un plan de butée (A) orthogonal à l'axe médian (M), contre lequel le piston cylindrique (4) s'applique dans sa position initiale non actionnée, le noyau (7) présentant plusieurs surélévations (9) qui s'avancent axialement dans la direction d'actionnement (B) jusqu'au plan de butée (A), qui sont agencées à distance les unes des autres dans la direction circonférentielle.

3. Appareil de freinage (1) selon la revendication 2, **caractérisé en ce que** les surélévations (9) forment des plateaux plats (10) dont les surfaces d'extrémité axiales sont agencées dans le plan de butée (A).

4. Appareil de freinage (1) selon la revendication 2 ou 3, **caractérisé en ce que** l'enveloppe (6) présente, dans la direction circonférentielle entre deux surélévations (9) voisines, au moins un relief (11) qui est agencé dans la direction circonférentielle entre deux surélévations (9) et qui s'avance dans la direction d'actionnement (B) au-dessus du plan de butée (A).

5. Appareil de freinage (1) selon la revendication 4, **caractérisé en ce que** l'enveloppe (6) présente au moins un creux (12) qui est formé en dessous du plan de butée (A) dans la direction d'actionnement (B) et qui est agencé directement à côté d'au moins un relief (11).

6. Appareil de freinage (1) selon la revendication 4 ou 5, **caractérisé en ce que** le relief (11) est conçu comme une nervure qui est configurée sous forme étendue dans un côté frontal (15) du disque de butée (5) entre une dimension radiale intérieure (Ri) et une dimension radiale extérieure (Ra).

7. Appareil de freinage (1) selon au moins l'une quelconque des revendications précédentes, **caractérisé en ce que** l'enveloppe (6) présente plusieurs saillies radiales (13), qui sont régulièrement réparties dans la direction circonférentielle et qui s'avancent dans la direction radiale au-delà d'un côté extérieur radial (14) du disque de butée (5) et plus loin qu'un diamètre de l'alésage cylindrique (3).

8. Appareil de freinage (1) selon au moins l'une quelconque des revendications précédentes, **caractérisé en ce que** le disque de butée (5) est construit essentiellement selon une symétrie de plan par rapport à un plan central (Z) orthogonal à l'axe médian (M).

9. Appareil de freinage (1) selon au moins l'une quelconque des revendications précédentes, **caractérisé en ce que** le carter (2) présente au moins une saillie d'appui (19) dépassant radialement vers l'intérieur dans l'alésage cylindrique (3), sur laquelle le disque de butée (5) s'appuie dans la direction de dégagement (L).
